# EUROPÄISCHE PATENTSCHRIFT

(11) **EP 3 124 878 B1**
(45) Veröffentlichungstag und Bekanntmachung des Hinweises auf die Patenterteilung: **23.10.2019**
(21) Anmeldenummer: 16001341.3
(22) Anmeldetag: 14.06.2016
(51) Int. Cl.: F24D 3/08, F24D 11/00, F24D 19/10, H02J 3/26, H02J 3/32, H02P 9/02

(54) **VERFAHREN UND VORRICHTUNG ZUM BETREIBEN EINES MINI/MIKRO-BLOCKHEIZKRAFTWERKES FÜR EINFAMILIENHÄUSER**
METHOD AND DEVICE FOR OPERATING A MINI/MICRO CHP PLANT FOR SINGLE-FAMILY DWELLINGS
PROCEDE ET DISPOSITIF DE FONCTIONNEMENT D'UNE CENTRALE DE COGENERATION MICRO/MINI POUR MAISONS INDIVIDUELLES

(30) Priorität: 17.07.2015 DE 102015009086
(43) Veröffentlichungstag der Anmeldung: 01.02.2017
(73) Patentinhaber: CTA Anlagenbau Dienstleistungs GmbH, 15517 Fürstenwalde (DE)
(72) Erfinder: Krügel, Meinfried, 15526 Bad Saarow (DE)
(74) Vertreter: Hannig, Wolf-Dieter

(56) Entgegenhaltungen:
- DE-A1-102010 043 844
- DE-A1-102011 053 982
- DE-U1-202007 016 024

## Beschreibung

Die Erfindung betrifft ein Verfahren zum Betreiben eines Mini/Mikro-Blockheizkraftwerkes für ein Einfamilienhaus, bei dem ein Verbrennungsmotor ein Drehmoment zum Antrieb einer als Generator eingesetzten Asynchronmaschine, die einen Drehstrom mit den Phasen R, S und T zur Entnahme einer elektrische Leistung zwecks Erzeugen von Wärme- und Elektroenergie für die Verbraucher im Haus liefert, und einen Abgasstrom erzeugt, dessen Abwärme über einen Wärmetauscher einem Wärmespeicher zum Erzeugen von Wärmeenergie für den Brauchwasser- und Heizkreislauf und von Warmwasser des Hauses zugeführt wird, ein Batteriespeicher zum Vorhalten von elektrischer Leistung für elektrische Verbraucher und eine Gleichrichter/Wechselrichter-Einheit zum Aufladen des Batteriespeichers durch Gleichrichten zumindest eines Teils des vom Generator gelieferten Wechselstroms und zum Umwandeln des Gleichstroms in Wechselstrom für elektrische Verbraucher im Haus, wobei der Verbrennungsmotor, der Generator, der Wärmespeicher, der Batteriespeicher und die Gleichrichter/Wechselrichter-Einheit von einer Zentrallogik gesteuert werden.

Die Erfindung betrifft weiterhin Vorrichtungen zur Durchführung des Verfahrens mit einem Verbrennungsmotor, der ein Drehmoment zum Antrieb einer als Generator eingesetzten Asynchronmaschine, die Drehstrom mit den Phasen R, S und T zur Entnahme einer elektrische Leistung für den Wärme- und Elektroenergieverbrauch im Haus liefert, und einen Abgasstrom erzeugt, dessen Abwärme über einen Wärmetauscher einem Wärmespeicher zum Erzeugen von Wärmeenergie für den Brauchwasser- und Heizkreislauf und Warmwasser des Hauses zugeführt wird, einem Batteriespeicher zum Vorhalten von elektrischer Leistung für elektrische Verbraucher, einer Gleichrichter/Wechselrichter-Einheit zum Aufladen des Batteriespeichers durch Gleichrichten zumindest eines Teils des vom Generator gelieferten Wechselstroms und zum Umwandeln des Gleichstroms in Wechselstrom für elektrische Verbraucher im Haus und einer Zentrallogik, die mit dem Verbrennungsmotor, Generator, Wärmespeicher, Batteriespeicher und der Gleichrichter/Wechselrichter-Einheit zum Ansteuern verbunden ist.

### Stand der Technik

Blockheizkraftwerke (BHKW) stellen grundsätzlich Wärme- und Elektroenergie aus der Kraft-Wärme-Kopplung zur Verfügung, bei der ein mit Öl oder Gas angetriebener Verbrennungsmotor bzw. eine Brennstoffzelle mit einem Strom erzeugenden Generator gekoppelt ist (DE 41 02 636 C2, DE 197 40 398 A1, DE 198 16 415 A1, DE 198 22 880A1, DE 20 2009 009 945 U1, DE 10 2010 015 702 A1, DE 20 2010 018 242 U1, DE 20 2011 102 374 U1, DE 20 2011 106 636 U1, DE 10 2011 120 823 A1).

Blockheizkraftwerke kommen immer dort zum Einsatz, wo neben der Elektroenergie auch Wärmenergie genutzt werden kann. Wichtige Einsatzgebiete für Blockheizkraftwerke sind deshalb Wohnsiedlungen, Gewerbebetriebe, Gewerbeparks, öffentliche Gebäude oder Schwimmbäder. Diese Blockheizkraftwerke sind für lange Laufzeiten unter Volllast konzipiert und arbeiten entweder in einer wärmegeführten oder stromgeführten Betriebsweise. Bei der wärmegeführten Betriebsweise ist die Steuergröße des BHKW der Wärmebedarf und bei der stromgeführten Betriebsweise der Strom. Voraussetzung für eine wirtschaftliche Betriebsweise des BHKW ist eine weitgehend unterbrechungsfreie Laufzeit von mindestens 6000 Stunden pro Jahr (BHKW-Grundlagen, Arbeitsgemeinschaft für sparsamen und umweltfreundlichen Energieverbrauche.V.,www.asue.de/cms/upload/inhalte/../ broschuere/bhkw- grundlagen-2010.pdf).

Des Weiteren ist bekannt, in Mehrfamilienhäusern Mini-Blockheizkraftwerke mit Leistungen kleiner 50 kW und in Einfamilienhäuser sogenannte Mikro-Blockheizkraftwerke mit Leistungen kleiner 20kW einzusetzen, die jedoch auch eine Mindestlaufzeit von >5000 Stunden pro Jahr und zudem einen Zusatzkessel oder einen Pufferspeicher erfordern ("Mini-BHKW -noch zu groß für Ein- und Zweifamilienhäuser", www.springer-vdi-verlag.de/library/common.../ebwk 06 2008 thomas.pdf). Bisher konnten sich die Mikro-BHKW bei Einfamilienhäusern nicht durchsetzen, weil die gefordert hohe jährliche Laufleistung nicht erreicht wird, ihre Anschaffungs- und Wartungskosten zu hoch sind und der elektrische Wirkungsgrad zu gering ist.
Aus der DE 10 2013 100 999 A1 ist eine Energieversorgungseinrichtung mit einem Blockheizkraftwerk, einem elektrischen Energiespeicher, einem steuerbaren Wirkleistungsverbraucher und einer Kontrollvorrichtung mit einem Anschluss für ein externes Energieversorgungsnetz, einem Anschluss für Nutzverbraucher und einem Wechselrichter bekannt, wobei der Wechselrichter dazu eingerichtet ist, Wirk- und Blindleistung bereitzustellen. Dieser bekannte Stand der Technik realisiert ein Verfahren zur schnellen Umschaltung von einem Netzparallelbetriebsmodus in einem Inselbetriebsmodus, bei dem pro Phase der vom Blockheizkraftwerk bereitgestellten elektrischen Energie als auch der von einem angeschlossenen Nutzverbraucher angenommenen Energie die Spannung, Stromstärke und der cos ϕ verglichen und pro Phase ausgeregelt werden.
Des Weiteren offenbart die EP 2 348 597 A1 ein Verfahren zur Angleichung der Teilleistungen, die an einem Netzanschlusspunkt zwischen einem mehrphasigen Wechselstromnetz mit mehreren Außenleitern einerseits und einer Anlage zur Einspeisung elektrischer Energie in das Wechselstromnetz mit einem mehrphasigen Wechselrichter sowie an das Wechselstromnetz angeschlossenen elektrischen Verbrauchern andererseits über die einzelnen Außenleiter fließen, wobei die Unterschiede zwischen den über die einzelnen Außenleiter fließenden Teilleistungen erfasst und durch Einspeisung unterschiedlich hoher Teilleistungen mit dem Wechselrichter in die einzelnen Außenleiter reduziert werden.
Außerdem ist ein Asysnchrongenerator bekannt, der ein einphasiges Verbrauchernetz über eine Transformation versorgt, indem die dreiphasig symmetrisch erzeugte Energie vollständig für den einphasigen Anschluss umgewandelt wird (T.F.Chan, L.L. Lai; "Single-Phase Operation of a Three-Phase Induction Generator Using a Novel Line Current Injection Method", IEEE Transaction on Energy Conversion, Vol. 20, No. 2, 2. June 2005). Allen diesen bekannten Lösungen ist der Nachteil gemeinsam, dass die elektrische Leistung des Generators nicht an die momentane Verbrauchslast aus Wärme- und Elektroenergie anpassbar ist.

Aus der DE 10 2010 043 844 A1 ist ein System zur Kraft-Wärme-Kopplung bekannt, das einen Verbrennungsmotor und einen Wärmespeicher aufweist, wobei der Verbrennungsmotor in einem Kraftfahrzeug stationär angeordnet ist. Der Verbrennungsmotor ist mit dem Wärmespeicher koppelbar, so dass die Wärme der Abgase des Verbrennungsmotors dem Wärmespeicher zuführbar ist.

Das System besitzt außerdem einen Generator und einen Speicher für elektrische Energie, wobei der Generator in dem Kraftfahrzeug angeordnet ist und zur Erzeugung von elektrischer Energie mit dem Verbrennungsmotor gekoppelt ist, und wobei der Speicher für elektrische Energie mit dem Generator verbunden ist.

### Aufgabenstellung

Bei diesem Stand der Technik liegt der Erfindung die Aufgabe zugrunde, ein Verfahren und eine Vorrichtung zum Betreiben eines Mini/Mikro-Blockheizkraftwerkes für Einfamilienhäuser bereitzustellen, mit denen die jährliche Laufzeit des Mini/Mikro-BHKW bei gleichzeitiger Verbesserung des thermischen und elektrischen Wirkungsgrades deutlich reduziert und der Wartungsaufwand sowie die Betriebskosten gesenkt werden.

Diese Aufgabe wird durch ein Verfahren der eingangs genannten Art mit den Merkmalen des Anspruches 1 und durch die Vorrichtung mit den Merkmalen des Anspruches 10 gelöst.

Vorteilhafte Ausgestaltungen des erfindungsgemäßen Verfahrens und der Vorrichtung sind den Unteransprüchen entnehmbar.

Die erfindungsgemäße Lösung geht von dem Kerngedanken aus, die vom Generator abgegebene Leistung in Abhängigkeit der momentanen Gesamtlast der Verbraucher im Einfamilienhaus umzuverteilen und zugleich an die entsprechenden momentanen Teillasten aus thermischer Energie und Elektroenergie synchron anzupassen.
Dies wird dadurch erreicht, dass die auf den Phasen R, S und T vorzuhaltende elektrische Leistung des Generators in Abhängigkeit der momentan anliegenden Verbrauchslast aus Wärmeenergie und Elektroenergie zumindest von den Phasen R und T teilweise oder insgesamt auf die Phase S durch ein Regelglied umverteilt und an die momentan anliegende Last aus Wärme- und Elektroenergie angepasst wird, in dem die momentanen Lasten aus Wärmeenergie und Elektroenergie gemessen, die Messwerte an die Zentrallogik übermittelt, in dieser mit einer auf den Verbrauch abgestimmten Jahresdauer- und Tagesganglinie für Wärme- und Elektroenergie verglichen, Lastabweichungen mit zulässiger Toleranz festgestellt und die in der Phase R oder T oder den Phasen R und T vorgehaltene elektrische Leistung durch das Regelglied entsprechend der momentanen Verbrauchslast auf die Phase S potenzialfrei eingespeist wird.

In einer bevorzugten Ausführungsvariante wird das erfindungsgemäße Verfahren durch folgende Schritte ausgeführt:
a) Starten des Verbrennungsmotors und Zuschalten des Generators zum Erzeugen eines symmetrischen Drehstroms mit den Phasen R, S und T,
b) stetiges Messen der Verbrauchslast durch die am Wärmespeicher zugeordnete Wärmemesser und den Elektroverbrauchern zugeordnete Elektrozähler,
c) Ablegen einer auf das Einfamilienhaus berechneten Jahresdauer- und Tagesganglinie für die Wärmeenergie und für die Elektroenergie und deren permanente Fortschreibung entsprechend dem tatsächlichen Verbrauch in der Zentrallogik,
d) Ermitteln der momentanen Lasten aus den Messwerten und Bestimmen der Lastabweichungen von der Tagesganglinie für die Wärme- und Elektroenergie durch die Zentrallogik,
e) direktes Umwandeln des auf eine erste Phase (S) des Drehstroms entfallenden Leistungsanteils durch den anliegenden Strom und Wandeln der auf die anderen beiden Phasen des Drehstroms entfallenden Leistungsanteile durch das Regelglied,
f) Verteilen der Leistungsanteile der Phasen R und T auf die Phase S durch das Regelglied derart, dass sie der momentan ermittelten Last aus Wärme- und Elektroenergie gemäß Schritt d) entsprechen,
g) Laden des Batteriespeichers und Wärmespeichers derart, dass der auf den Batteriespeicher entfallende Leistungsanteil den auf den Wärmespeicher entfallenden Leistungsanteil um 5 bis 10% übersteigt,
h) Abschalten des Verbrennungsmotors, sobald der Batteriespeicher und Wärmespeicher ihre maximal vorgegebenen Kapazitäten an Leistungsanteilen erreichen,
i) Entnehmen der Leistungsanteile aus dem Batteriespeicher und Wärmespeicher durch die Verbraucher bis auf eine Restkapazität an Leistungsanteilen von mindestens 4% und
j) Zuschalten des Verbrennungsmotors, sobald der Batteriespeicher und Wärmespeicher die Restkapazität gemäß Schritt i) unterschreitet und erneutes Ausführen der Schritte a) bis j).

In einer weiteren bevorzugten Ausführungsform des erfindungsgemäßen Verfahrens ist vorgesehen, dass als Regelglied ein Drehstrom-Wechselstrom-Transformator mit □Wandler verwendet wird, wobei der Drehstrom-Wechselstrom-Transformator den auf eine Phase entfallende Leistungsanteil durch den direkt anliegenden Strom umwandelt und die Wandler die auf die anderen Phasen entfallende Leistungsanteile potenzialfrei in die erste Phase einspeisen. Dies hat den Vorteil, dass die Leistung in jeder Phase an die Last angepasst werden kann und nur soweit vorgehalten werden muss, wie sie gebraucht wird.

Nach einer weiteren bevorzugten Ausgestaltung des erfindungsgemäßen Verfahrens wird der Wandler für die Phase R und der Wandler für die Phase T durch die Schaltung von Gleichrichtern so betrieben, dass ein Wandler unidirektional und der andere Wandler bidirektional geschaltet ist.
Zweckmäßigerweise können der Drehstrom-Wechselstrom-Transformator und die Wandler in die Schaltung des Generators integriert werden und direkt aus diesem betrieben werden.

In einer alternativen Ausführungsform des erfindungsgemäßen Verfahrens können als Regelglied für jede einzelne Phase von der Zentrallogik gesteuerte Gleichrichter verwendet werden, die dafür Sorge tragen, dass die Leistung an die jeweilige Last in den einzelnen Zweigen angepasst wird.

Nach einer weiteren bevorzugten Ausgestaltung des erfindungsgemäßen Verfahrens werden als Elektrozähler Vier-Quadranten-Zähler eingesetzt, die die momentane Verbrauchslast an Elektroenergie in jeder Phase messen und die Messwerte an die Zentrallogik zur Verarbeitung und Ausgabe von Steuerbefehlen übermitteln.

Die Aufgabe wird weiterhin durch eine Vorrichtung der eingangs genannten Art dadurch gelöst, dass zum Ermitteln der momentanen Last von Wärme- und Elektroenergie Wärmemesser und Elektrozähler sowie zum Umverteilen der vorzuhaltenden elektrischen Leistung der Phasen R, S und T des Drehstroms an die momentane Last an Wärme- und Elektroenergie entweder
a) ein Regelglied aus Drehstrom-Wechselstrom-Transformator mit elektronischen Wandlern, dessen Primärseite drei, einem sekundären Ausgang zugeordnete Primärwicklungen aufweist, von denen eine der Primärwicklungen direkt mit den Phasen S und T sowie die anderen Primärwicklungen über je einen elektronischen Wandler mit den Phasen S und R sowie R und T verbunden ist oder
b) für jede Phase R,S,T ein Regelglied mit von der Zentrallogik angesteuerte diodengeregelte Gleichrichter vorgesehen ist.

In einer weiteren zweckmäßigen Ausführungsform der Erfindung weist der den Phasen R und S zugeordnete Wandler bidirektional und der den Phasen R und T zugeordnete Wandler unidirektional geschaltete Gleichrichterdioden auf die mit der Zentrallogik zwecks Ansteuerung verbunden sind.

Eine weitere vorteilhafte Ausgestaltung der erfindungsgemäßen Vorrichtung sieht vor, dass der Drehstrom-Wechselstrom-Transformator und die Wandler in die Schaltung des Generators integriert sind.

Zweckmäßig ist weiterhin, dass die Wärmemesser dem Wärmespeicher und die Elektrozähler der Hausverteilung zugeordnet sind, wobei die Wärmemesser und der Elektrozähler mit der Zentrallogik verbunden sind.

Als besonders geeignet für die Messung des momentanen Verbrauchs an Elektroenergie haben sich Vier-Quadranten-Zähler erwiesen.

Weitere Vorteile und Einzelheiten ergeben sich aus der nachfolgenden Beschreibung unter Bezugnahme auf die beigefügten Zeichnungen.

### Ausführungsbeispiel

Die Erfindung soll nachstehend an einem Ausführungsbeispiel näher erläutert werden.

Es zeigen
Fig. 1 eine schematische Darstellung des Mini/Mikro-Blockheizkraftwerks als Insel-Lösung mit Anschluss an die Heizung, Warmwasserversorgung und Elektroverbraucher,
Fig. 2 eine in den Generator integrierte Schaltung des Drehstrom-Wechselstrom-Transformator mit Wandlern und Wechselstromausgang und
Fig. 3a und 3b eine Darstellung einer typischen Tagesganglinie der Wärmelast und Stromlast eines Einfamilienhauses

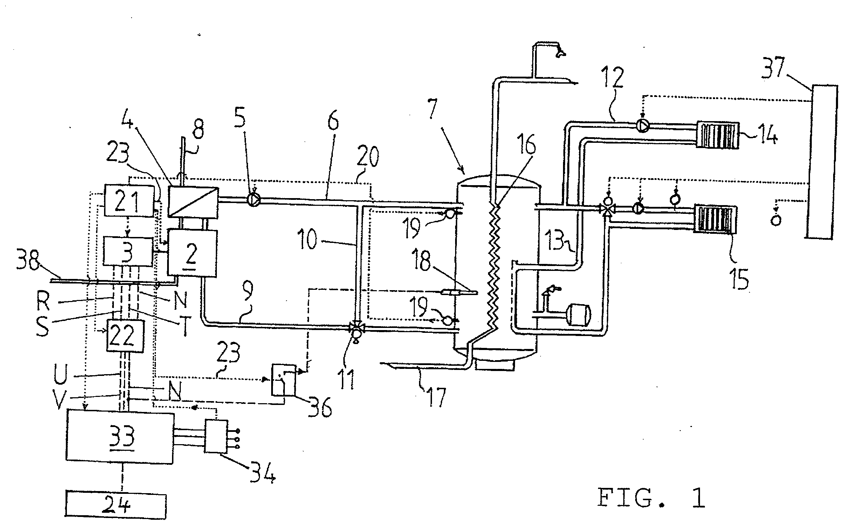

Die Fig. 1 zeigt in schematischer Darstellung den grundsätzlichen Aufbau des Mini/Mikro-Blockheizkraft 1, das ein Einfamilienhaus mit einem durchschnittlichen Energieverbrauch von 6 kWh elektrischer und 20 kWh thermischer Leistung versorgt.
Das Mini/Mikro-Blockheizkraftwerk (BHKW) 1 umfasst im Wesentlichen einen mit Öl oder Gas betriebenen flüssigkeitsgekühlten Verbrennungsmotor 2 und eine Asynchronmaschine als Generator 3, der mit dem Verbrennungsmotor 2 gekoppelt ist.
Der Verbrennungsmotor 2 hat eine mechanische Ausgangsleistung von 10 kW und ist mit einer Zuführleitung 38 für Öl oder Gas verbunden. Die Asynchronmaschine liefert in einer Vierleiter-Schaltung einen symmetrischen Drehstrom mit den Phasen R, S und T bei 50 Hz 400/231 V und einer Ausgangsleistung bis zu 20 kW, wobei zwischen den drei Phasen eine unsymmetrische Belastung, beispielsweise auf der einen Phase 300% der Nennleistung und auf den anderen beiden Phasen keine Leistung einstellbar sein muss.

Die Verbrennungsabgase des Verbrennungsmotors 2 werden einem Abgas-Wärmetauscher 4 zugeführt, dessen Flüssigkeitsseite über eine durch ein Rückschlagventil 5 absperrbare Rohrleitung 6 mit einem Wärmespeicher 7 verbunden ist, der mit Brauchwasser gefüllt ist. Die abgekühlten Verbrennungsabgase werden von der Gasseite des Abgas-Wärmetauschers 4 über eine Abgasleitung 8 nach außen in die Atmosphäre abgeführt. Der Wärmespeicher 7 hat ein Speichervolumen 1000 l und ist als Schichtenspeicher ausgeführt.
Der Kühlwasserkreislauf des Verbrennungsmotors 2 steht durch eine Rohrleitung 9 mit dem Wärmespeicher 7 in Verbindung, so dass einerseits die Motorwärme und andererseits die Verbrennungsabgase jeweils ihre Wärme an das Brauchwasser im Wärmespeicher 7 abgeben können.
Die Rohrleitung 9 ist mit der Rohrleitung 6 über eine Verbindungsleitung 10 verbunden, die mittels eines Drei-WegeVentils 11 absperrbar ist, so dass der Kühlkreislauf des Verbrennungsmotors 2 zu Wartungs- und Montagezwecken unterbrochen werden kann.

Der Wärmespeicher 7 ist durch Vorlaufleitungen 12 und Rücklaufleitungen 13 mit den Heizkörpern 14 bzw. der Fußbodenheizung 15 des Hauses verbunden.
Die Steuerung der Heizung erfolgt über eine übliche Heizungssteuerung 37, die daher nicht weiter beschrieben werden muss.
Im Wärmespeicher 7 befindet sich ein Wärmeaustauscher 16, der mit einer Kaltwasserzuleitung 17 verbunden ist, über die Kaltwasser dem Wärmeaustauscher 16 zugeführt, durch das Brauchwasser erwärmt und an die Verbrauchsstellen im Haus zu Entnahme verteilt wird.
Zusätzlich ist der Wärmespeicher 7 mit einem elektrischen Heizstab 18 ausgerüstet, der durch einen von der Zentrallogik 21 angesteuerten elektronischen Schalter 36 zuschaltbar ist, wenn die vom Brauchwasser bereitgestellte Wärmemenge zum Erwärmen der Heizung und Warmwasser nicht ausreichen sollte.

Am Wärmespeicher 7 befinden sich Wärmemesser 19, die der zum Wärmetauscher 4 führenden Rohrleitung 6 und der mit dem Kühlkreislauf des Verbrennungsmotors 2 in Verbindung stehenden Rohrleitung 9 zugeordnet sind. Die Wärmemesser 19 messen permanent die verbrauchten Wärmemengen und übermitteln diese über die Steuerleitungen 20 an die Zentrallogik 21, die die Messwerte verarbeitet und in entsprechende Steuerbefehle für ein später noch beschreibendes Regelglied 22 am Generator 3 umsetzt.

Die Zentrallogik 21 ist weiterhin mit dem Verbrennungsmotorotor 2, dem Generator 3 und dem Heizstab 18 über Steuerleitungen 23 verbunden, die die Steuerbefehle der Zentrallogik 21 zum Starten und Stoppen des Verbrennungsmotors 2, Anfahren und Ausschalten des Generators 3 sowie Zu- und Ausschalten des Heizstabes 18 weiterleitet.

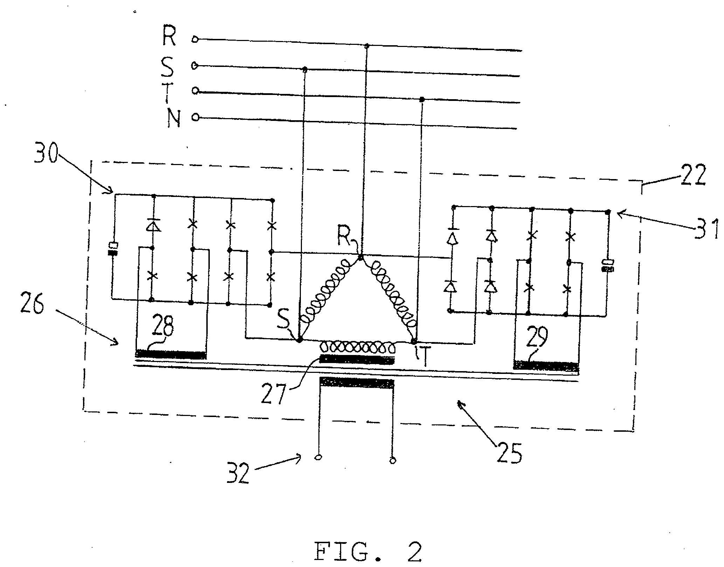

Zum Mini/Mikro-BHKW 1 gehört des Weiteren ein Batteriespeicher 24, welcher sich aus 8 bis 12 Lithium-Ionen- oder Blei-Batterien mit einer Kapazität von 150 bis 225Ah zusammensetzt. Der Ausgang des Generators 3 liegt mit seinen 3 Phasen R, S und T sowie Nullpunkt N am Regelglied 22 an, dessen Aufbau in der Fig. 2 gezeigt ist.
Das Regelglied 22 besteht aus einem Drehstrom-Wechselstrom-Transformator 25, dessen Primärseite 26 drei Primärwicklungen 27, 28 und 29 aufweist, von denen die Primärwicklung 27 direkt mit den Phasen S und T verbunden sowie die anderen beiden Primärwicklungen 28 und 29 über je einen elektronischen Wandler 30 und 31 an die Phasen S und R sowie T und R angeschlossen sind, so dass sich die drei Primärwicklungen gemeinsam einen sekundären Wechselstromausgang 32 teilen.
Der zwischen den Phasen S und R angeschlossene Wandler 30 ist bidirektional und der zwischen die Phasen R und T angeschlossene Wandler 31 ist unidirektional geschaltet.
Die Primärwicklung 27, die zwischen den Phasen S und T liegt, wandelt den auf die erste Phase S entfallenden Leistungsanteil entsprechend dem anliegenden Strom direkt um, d.h. zu 100%, während die Wandler 30 und 31 die auf den anderen Phasen entfallenden Leistungsanteile potenzialfrei in die erste Phase einspeisen. Durch die Ansteuerung der in den Wandlern 30 und 31 geschalteten Gleichrichter, Pufferkapazitäten und elektronische Schalter können über eine Pulsweitenmodulation mittels der Zentrallogik auf der einen Phase bis zu 300% der Nennleistung und auf den anderen Phasen unterschiedliche Leistungsanteile bis zu keiner Leistung verteilt werden, d.h. der symmetrisch erzeugte Drehstrom kann in weiten Grenzen unsymmetrisch belastet werden.

Es wird nochmals auf die Fig. 1 Bezug genommen. Der Wechselstromausgang 32 des Regelgliedes 22 ist mit einer Gleichrichter/Wechselrichter-Einheit 33 verbunden, die einerseits den vom Regelglied 22 abgegebenen Wechselstrom in Gleichstrom zum Aufladen des Batteriespeichers 24 umwandelt und andererseits den Gleichstrom aus dem Batteriespeicher 24 bei Anforderung über die Zentrallogik 21 in Wechselstrom für elektrische Verbraucher zurückwandelt. Der Verbrauch an elektrischer Energie wird durch Elektrozähler 34 permanent gemessen und über eine Verbindungsleitung 35 an die Zentrallogik 21 zur Verarbeitung übermittelt. Vorteilhafterweise können als Elektrozähler 34 Vier-Quadranten-Zähler eingesetzt werden, mit denen es möglich ist, alle elektrische Größen wie beispielsweise auch den Blindstrom zu messen.

Es soll nun der Ablauf des erfindungsgemäßen Verfahrens näher verdeutlicht werden. Das erfindungsgemäße Verfahren läuft wie folgt ab:
a) Starten des Verbrennungsmotors 2 und Zuschalten des Generators 3 zum Erzeugen eines Drehstroms mit den Phasen R, S und T,
b) stetiges Messen der Verbrauchslast durch die dem Wärmespeicher 7 zugeordnete Wärmemesser 19 und den Elektroverbrauchern zugeordnete Elektrozähler 34,
c) Ablegen einer auf das Einfamilienhaus berechneten Jahresdauer- und Tagesganglinie für die Wärmeenergie und für die Elektroenergie und deren permanente Fortschreibung entsprechend dem tatsächlichen Verbrauch in der Zentrallogik 21,
d) Ermitteln der momentanen Teillasten für die Wärme- und Elektroenergie aus den Messwerten und Bestimmen der Lastabweichungen von der Tagesganglinie durch die Zentrallogik 21,
e) Umwandeln des auf eine erste Phase des Drehstroms entfallenden Leistungsanteils und Wandeln der auf die anderen beiden Phasen des Drehstroms entfallenden Leistungsanteile durch das Regelglied 22,
f) Verteilen der Leistungsanteile auf die Phasen R, S und T durch das Regelglied 22 derart, dass sie der momentan ermittelten Last aus Wärme- und Elektroenergie gemäß Schritt d) entsprechen,
g) Laden des Batteriespeichers 24 und Wärmespeichers 7 derart, dass der auf den Batteriespeicher entfallende Leistungsanteil den auf den Wärmespeicher 7 entfallenden Leistungsanteil um 5 bis 10% übersteigt,
h) Abschalten des Verbrennungsmotors 2, sobald der Batteriespeicher 24 und Wärmespeicher 7 ihre maximal vorgegebenen Kapazitäten an Leistungsanteilen erreichen,
i) Entnehmen der Leistungsanteile aus dem Batteriespeicher 24 und Wärmespeicher 7 durch die Verbraucher bis auf eine Restkapazität an Leistungsanteilen von mindestens 4% und
j) Zuschalten des Verbrennungsmotors 2, sobald der Batteriespeicher 24 und Wärmespeicher 7 die Restkapazität gemäß Schritt i) unterschreitet und erneutes Ausführen der Schritte a) bis i).

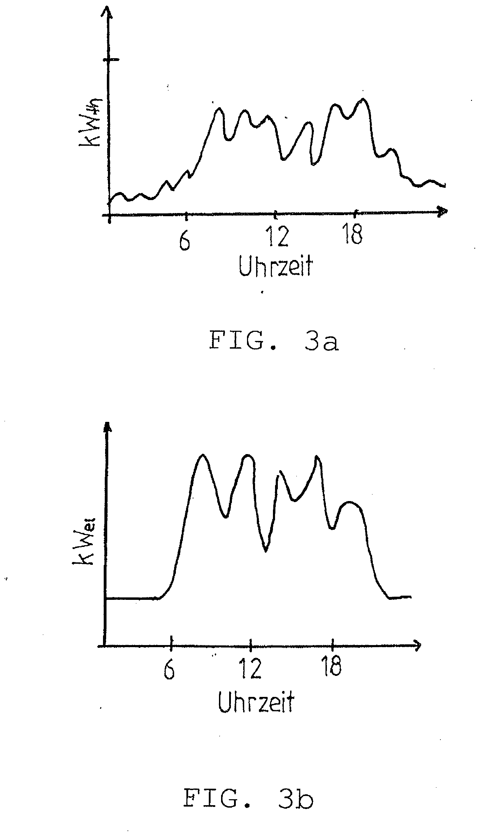

Die Fig. 3a und 3b zeigen typische nach der VDI-Richtlinie 4655 bestimmte Tagesganglinie für die Wärmeenergie und Elektroenergie eines Einfamilienhauses. Die Jahresdauerlinien und die Tagesganglinien für Wärme- und Elektroenergie sind in der Zentrallogik 21 abgelegt und werden entsprechend dem tatsächlichen Verbrauch über die erfassten Messwerte ständig fortgeschrieben.
Sobald eine Abweichung der durch die Wärmemesser 19 und die Elektrozähler 34, beispielsweise Vier-Quadranten-Zähler, momentan gemessenen Last von der Tagesganglinie für Wärmeenergie und für Elektroenergie in Abhängigkeit der Dauerlinie durch die Zentrallogik 21 festgestellt wird, gibt diese einen Regelbefehl an das Regelglied 22 aus, das eine an die Abweichung angepasste Umverteilung der auf die beiden Phasen R und und T entfallenden Leistungsanteile entsprechend der momentan anliegenden tatsächlichen Leistung an Wärme- und Elektroenergie vornimmt, ohne die auf der ersten Phase S anliegenden Last zu verändern.

Die Erfindung zeigt eine ganze Reihe von Vorteilen gegenüber dem Stand der Technik:
1. Sie ist besonders für Einfamilienhäuser geeignet.
2. Die diskontinuierliche Fahrweise des BHKW stellt auch maximal unterschiedliche Verbräuche von thermischer und elektrischer Energie sicher.
3. Die erfindungsgemäße diskontinuierliche Fahrweise des Mini/Mikro-BHKW ermöglicht im Wesentlichen eine längere Lebensdauer des BHKW und zwar um das Vier- bzw. Fünffache.
4. Die mit erheblichen Kosten verbundenen Wartungszyklen verkürzen sich infolge der Umverteilung der bereitstehenden Leistung auf die jeweilige momentane Last.
5. Es wird trotz der diskontinuierlichen Fahrweise ein effektiver Wirkungsgrad von >90% erreicht.
6. Die Kosten reduzieren sich für Nutzer um 30 bis 40%.
7. Witterungsunbilden mit den bekannten Folgen von Stromausfällen und sonstige Unsicherheiten haben auf die Mini/Mikro-BHKW nach der Erfindung keinen Einfluss, weil es autark seine Energie erzeugt.
8. Die erfindungsgemäßen Mini/Mikro-BHKW kann optional an das öffentliche Stromversorgungsnetz angeschlossen werden und ist somit flexibel einsetzbar.

**Bezugszeichenliste**

| | |
|---|---|
| Mini/Mikro-BHKW | 1 |
| Verbrennungsmotor | 2 |
| Generator | 3 |
| Abgas-Wärmetauscher | 4 |
| Rückschlagventil | 5 |
| Rohrleitung | 6 |
| Wärmespeicher | 7 |
| Abgasleitung | 8 |
| Rohrleitung | 9 |
| Verbindungsleitung zwischen 6 und 9 | 10 |
| Drei-Wege-Ventil | 11 |
| Vorlaufleitungen | 12 |
| Rücklaufleitungen | 13 |
| Heizkörper | 14 |
| Fußbodenheizung | 15 |
| Wärmeaustauscher in 7 | 16 |
| Kaltwasserzuleitung | 17 |
| Elektrischer Heizstab | 18 |
| Wärmemesser | 19 |
| Steuerleitungen für 19 | 20 |
| Zentrallogik | 21 |
| Regelglied | 22 |
| Steuerleitung | 23 |
| Batteriespeicher | 24 |
| Drehstrom-Wechselstrom-Transformator | 25 |
| Primärseite von 25 | 26 |
| Primärwicklungen | 27,28,29 |
| Elektronische Wandler | 30,31 |
| Sekundärer Wechselstromausgang | 32 |
| Gleichstrom/Wechselrichtereinheit | 33 |
| Elektrozähler | 34 |
| Verbindungsleitung für 34 | 35 |
| Elektronischer Schalter für 18 | 36 |
| Heizungssteuerung | 37 |
| Zuführleitung für Öl oder Gas | 38 |
| Drehstromphasen | R, S, T |
| Null-Punkt | N |

## Patentansprüche

1. Verfahren zum Betreiben eines Mini/Mikro-Blockheizkraftwerkes für ein Einfamilienhaus, bei dem ein Verbrennungsmotor (2) ein Drehmoment zum Antrieb einer als Generator (3) eingesetzten Asynchronmaschine, die einen Drehstrom mit den Phasen R, S und T zur Entnahme einer elektrische Leistung zwecks Erzeugen von Wärme- und Elektroenergie für die Verbraucher im Haus liefert, und einen Abgasstrom erzeugt, dessen Abwärme über einen Wärmetauscher (4) einem Wärmespeicher (7) zum Erzeugen von Wärmeenergie für den Brauchwasser- und Heizkreislauf und von Warmwasser des Hauses zugeführt wird, ein Batteriespeicher (24) zum Vorhalten von elektrischer Leistung für elektrische Verbraucher und eine Gleichrichter/Wechselrichter-Einheit (33) zum Aufladen des Batteriespeichers (24) durch Gleichrichten zumindest eines Teils des vom Generator (3) gelieferten Wechselstroms und zum Umwandeln des Gleichstroms in Wechselstrom für elektrische Verbraucher im Haus, wobei der Verbrennungsmotor (2), der Generator (3), der Wärmespeicher (7), der Batteriespeicher (24) und die Gleichrichter/Wechselrichter-Einheit (33) von einer Zentrallogik (21) gesteuert werden, **dadurch gekennzeichnet, dass** die auf den Phasen R, S und T vorzuhaltende elektrische Leistung des Generators (3) in Abhängigkeit der momentan anliegenden Verbrauchslast aus Wärmeenergie und Elektroenergie zumindest von den Phasen R und T teilweise oder insgesamt auf die Phase S durch ein Regelglied (22) umverteilt und an die momentan anliegende Last aus Wärme- und Elektroenergie angepasst wird, in dem die momentanen Lasten aus Wärmeenergie und Elektroenergie permanent gemessen, die Messwerte an die Zentrallogik (21 übermittelt, in dieser mit einer auf den Verbrauch abgestimmten Jahresdauer- und Tagesganglinie für Wärme- und Elektroenergie verglichen, Lastabweichungen mit zulässiger Toleranz festgestellt und die in der Phase R oder T oder den Phasen R, T vorgehaltene elektrische Leistung durch das Regelglied (22) entsprechend der momentanen Verbrauchslast auf die Phase S potenzialfrei eingespeist wird.

2. Verfahren nach Anspruch 1, **gekennzeichnet durch** folgende Schritte:
a) Starten des Verbrennungsmotors (2) und Zuschalten des Generators (3) zum Erzeugen eines Drehstroms mit den Phasen R, S und T,
b) stetiges Messen der Verbrauchslast durch am Wärmespeicher (7) zugeordnete Wärmemesser (19) und den Elektroverbrauchern zugeordnete Elektrozähler (34),
c) Ablegen einer auf das Einfamilienhaus berechneten Jahresdauer- und Tagesganglinie für die Wärmeenergie und für die Elektroenergie und deren permanente Fortschreibung entsprechend dem tatsächlichen Verbrauch in der Zentrallogik (21),
d) Ermitteln der momentanen Teillasten für die Wärme- und Elektroenergie aus den Messwerten und Bestimmen der Lastabweichungen von der Tagesganglinie durch die Zentrallogik (21),
e) direktes Umwandeln des auf eine erste Phase (S) des Drehstroms entfallenden Leistungsanteils durch den anliegenden Strom und Wandeln der auf die anderen beiden Phasen des Drehstroms entfallenden Leistungsanteile durch das Regelglied (22),
f) Verteilen der Leistungsanteile der Phasen (R, T) auf die Phase (S) durch das Regelglied (22) derart, dass sie der momentan ermittelten Last aus Wärme- und Elektroenergie gemäß Schritt d) entsprechen,
g) Laden des Batteriespeichers (24) und Wärmespeichers (7) derart, dass der auf den Batteriespeicher entfallende Leistungsanteil den auf den Wärmespeicher (7) entfallenden Leistungsanteil um 5 bis 10% übersteigt,
h) Abschalten des Verbrennungsmotors (2), sobald der Batteriespeicher (24) und Wärmespeicher (7) ihre maximal vorgegebenen Kapazitäten an Leistungsanteilen erreichen,
i) Entnehmen der Leistungsanteile aus dem Batteriespeicher (24) und Wärmespeicher (7) durch die Verbraucher bis auf eine Restkapazität an Leistungsanteilen von mindestens 4% und
j) Zuschalten des Verbrennungsmotors (2), sobald der Batteriespeicher (24) und Wärmespeicher (7) die Restkapazität gemäß Schritt i) unterschreitet und erneutes Ausführen der Schritte a) bis j).

3. Verfahren Anspruch 1 oder 2, **dadurch gekennzeichnet, dass** als Regelglied (22) ein Drehstrom-Wechselstrom-Transformator (25) mit Wandler (30,31) verwendet wird, wobei der Drehstrom-Wechselstrom-Transformator (25) den auf die Phase (S) entfallenden Leistungsanteil durch den direkt anliegenden Strom umwandelt und die Wandler (30,31) die auf die anderen Phasen entfallende Leistungsanteile potenzialfrei in die Phase (S) einspeisen.

4. Verfahren nach Anspruch 3, **dadurch gekennzeichnet, dass** der Wandler (30) für die Phase (S,R) und der Wandler (31) für die Phase (R,T) durch die Schaltung von Gleichrichtern so betrieben werden, dass ein Wandler (31) unidirektional und der andere Wandler (30) bidirektional geschaltet ist.

5. Verfahren nach Anspruch 3, **dadurch gekennzeichnet, dass** als Drehstrom-Wechselstrom-Transformator (25) ein Drei-Schenkel-Transformator eingesetzt wird.

6. Verfahren nach Anspruch 1, **dadurch gekennzeichnet, dass** der Drehstrom-Wechselstrom- Transformator (25) und die Wandler (30,31) in den Generator (3) integriert sind und direkt aus diesem betrieben werden.

7. Verfahren nach Anspruch 1 oder 2, **dadurch gekennzeichnet, dass** als Regelglied (22) drei gesteuerte Gleichrichter verwendet werden.

8. Verfahren nach Anspruch 1, **dadurch gekennzeichnet, dass** als Elektrozähler (34) Vier-Quadranten-Zähler eingesetzt werden.

9. Verfahren nach Anspruch 1, **dadurch gekennzeichnet, dass** Gleichstrom einer Solarquelle oder anderen Fremdquelle in den Batteriespeicher (24) eingespeist wird.

10. Vorrichtung zur Durchführung des Verfahrens nach Anspruch 1, mit einem Verbrennungsmotor (2), der ein Drehmoment zum Antrieb einer als Generator (3) eingesetzten Asynchronmaschine, die Drehstrom mit den Phasen R, S und T zur Entnahme einer elektrischen Leistung für Wärme- und Elektroenergieverbrauch im Haus liefert, und einen Abgasstrom erzeugt, dessen Abwärme über einen Wärmetauscher (4) einem Wärmespeicher (7) zum Erzeugen von Wärmeenergie für den Brauchwasser- und Heizkreislauf und Warmwasser des Hauses zugeführt wird, einem Batteriespeicher (24) zum Vorhalten von elektrischer Leistung für elektrische Verbraucher, einer Gleichrichter/Wechselrichter-Einheit (33) zum Aufladen des Batteriespeichers (24) durch Gleichrichten zumindest eines Teils des vom Generator (3) gelieferten Wechselstroms und zum Umwandeln des Gleichstroms in Wechselstrom für elektrische Verbraucher im Haus und einer Zentrallogik (21), die mit dem Verbrennungsmotor (2), Generator (3), Wärmespeicher (7), Batteriespeicher (24) und der Gleichrichter/Wechselrichter-Einheit (33) zum Ansteuern verbunden ist, **dadurch gekennzeichnet, dass** zum Ermitteln der momentanen Last von Wärme- und Elektroenergie Wärmemesser (19) und Elektrozähler (34) sowie zum Umverteilen der vorzuhaltenden elektrischen Leistung der Phasen R, S und T des Drehstroms auf die momentane Last von Wärme- und Elektroenergie entweder
a) ein Regelglied (22) aus einem Drehstrom-Wechselstrom-Transformator (25) mit elektronischen Wandlern (30,31), dessen Primärseite (26) drei, einem sekundären Ausgang (32) zugeordnete Primärwicklungen (27,28,29) aufweist, von denen eine der Primärwicklungen (27) direkt mit den Phasen S,T und die anderen Primärwicklungen (28,29) über je einen elektronischen Wandler (30,31) mit den Phasen S,T und R,T verbunden ist oder
b) für jede Phase R, S und T ein Regelglied (22) mit von der Zentrallogik (21) angesteuerte diodengeregelte Gleichrichter vorgesehen ist.

11. Vorrichtung nach Anspruch 10, **dadurch gekennzeichnet, dass** der den Phasen (R, S) zugeordnete Wandler (30) bidirektional und der den Phasen (R, T) zugeordnete Wandler (31) unidirektional geschaltete Gleichrichterdioden aufweist, die mit der Zentrallogik (21) zwecks Ansteuerung verbunden sind.

12. Vorrichtung nach Anspruch 10, **dadurch gekennzeichnet, dass** der Drehstrom-Wechselstrom-Transformator (25) und die Wandler (30,31) in den Generator (3) integriert sind.

13. Vorrichtung nach Anspruch 10, **dadurch gekennzeichnet, dass** der Drehstrom-Wechselstrom-Transformator (25) ein Dreischenkeltransformator ist.

14. Vorrichtung nach Anspruch 10, **dadurch gekennzeichnet, dass** die Wärmemesser (19) am Wärmespeicher (7) angeordnet und die Elektrozähler (34) der Hausverteilung zugeordnet sind, wobei die Wärmemesser (19) und der Elektrozähler (34) mit der Zentrallogik (21) verbunden sind.

15. Vorrichtung nach Anspruch 10, **dadurch gekennzeichnet, dass** der Elektrozähler (34) ein Vier-Quadranten-Zähler ist.

## Claims

1. Method for operating a mini/micro combined heat and power station for a single-family dwelling, in which an internal combustion engine (2) provides a torque for driving an asynchronous machine which is used as a generator (3) and which supplies a three-phase current having the phases R, S and T for drawing electrical power for the purpose of generating thermal and electrical energy for the consumers in the dwelling, and generates an exhaust gas stream, the waste heat of which is fed via a heat exchanger (4) to a heat accumulator (7) for generating thermal energy for the service water and heating circuit and hot water of the dwelling, a battery bank (24) for providing electrical power to electric consumers and a rectifier/inverter unit (33) for charging the battery bank (24) by rectifying at least part of the alternating current supplied by the generator (3) and for converting the direct current into alternating current for electric consumers in the dwelling, the internal combustion engine (2), the generator (3), the heat accumulator (7), the battery bank (24) and the rectifier/inverter unit (33) being controlled by a central logic (21), **characterized in that** the electrical power of the generator (3) to be provided on the phases R, S and T is redistributed as a function of the currently applied consumption load of thermal energy and electrical energy, at least partially from the phases R and T or completely to the phase S by means of a control element (22) and is adapted to the currently applied load of thermal and electrical energy, in which the current loads of thermal energy and electrical energy are permanently measured, the measured values are transmitted to the central logic (21), are compared therein with an annual duration and daily load curve for thermal and electrical energy matched to the consumption, load deviations are determined with permissible tolerance and the electrical power provided in one or both phases R or T is fed to the phase S in a potential-free manner by the control element (22) in accordance with the current consumption load.

2. Method according to claim 1, **characterized by** the following steps:
a) starting the internal combustion engine (2) and inserting the generator (3) in order to generate a three-phase current with the phases R, S and T,
b) continuous measuring of the consumption load by heat meters (19) assigned to the heat accumulator (7) and electric meters (34) assigned to the electric consumers,
c) storing an annual duration and daily load curve calculated for the single-family dwelling for the thermal energy and for the electrical energy and its permanent updating according to the actual consumption in the central logic (21),
d) determining the current partial loads for the thermal and electrical energy from the measured values and determining the load deviations from the daily load curve by the central logic (21),
e) directly converting the power component attributable to a first phase (S) of the three-phase current by the applied current and converting the power components attributable to the other two phases of the three-phase current by the control element (22),
f) distributing the power components of the phases (R, T) to the phase (S) by the control element (22) in such a way that they correspond to the currently determined load of thermal and electrical energy in accordance with step d),
g charging the battery bank (24) and the heat accumulator (7) in such a way that the power component attributable to the battery bank exceeds the power component attributable to the heat accumulator (7) by 5 to 10%,
h) switching off the internal combustion engine (2) as soon as the battery bank (24) and the heat accumulator (7) have reached their maximum predetermined capacities of power components,
i) taking the power components from the battery bank (24) and the heat accumulator (7) by the consumers up to a residual capacity of power components of at least 4%, and
j) inserting the internal combustion engine (2) as soon as the battery bank (24) and heat accumulator (7) fall below the residual capacity according to step i), and carrying out steps a) to j) again.

3. Method according to claim 1 or 2, **characterized in that** a three-phase alternating current transformer (25) with transducers (30, 31) is used as control element (22), the three-phase alternating current transformer (25) converting the power component which is attributable to the phase (S) by the directly applied current and the transducers (30, 31) feeding the power components which are attributable to the other phases into the phase (S) in a potential-free manner.

4. Method according to claim 3, **characterized in that** the transducer (30) for the phase (S, R) and the transducer (31) for the phase (R, T) are operated by switching rectifiers in such a way that one transducer (31) is switched in unidirectional manner and the other transducer (30) is switched in bidirectional manner.

5. Method according to claim 3, **characterized in that** a three-leg transformer is used as the three-phase alternating current transformer (25).

6. Method according to claim 1, **characterized in that** the three-phase alternating current transformer (25) and the transducers (30, 31) are integrated in the generator (3) and are operated directly from the latter.

7. Method according to claim 1 or 2, **characterized in that** three controlled rectifiers are used as control element (22).

8. Method according to claim. 1, **characterized in that** four-quadrant meters are used as electricity meters (34).

9. Method according to claim 1, **characterized in that** direct current of a solar source or other external source is fed into the battery bank (24).

10. Device for carrying out the method according to claim 1, comprising an internal combustion engine (2) which provides a torque for driving an asynchronous machine which is used as a generator (3) and supplies a three-phase current with the phases R, S and T for drawing electrical power for the thermal and electrical energy consumption in the dwelling, and generates an exhaust gas stream, the waste heat of which is fed via a heat exchanger (4) to a heat accumulator (7) for generating thermal energy for the service water and heating circuit and hot water of the dwelling, a battery bank (24) for providing electrical power to electric consumers, a rectifier/inverter unit (33) for charging the battery bank (24) by rectifying at least part of the alternating current supplied by the generator (3) and for converting the direct current into alternating current for electric consumers in the dwelling, and a central logic (21) which is connected to the internal combustion engine (2), generator (3), heat accumulator (7), battery bank (24) and the rectifier/inverter unit (33) for driving, **characterized in that** for determining the current load of thermal and electrical energy, heat meters (19) and electricity meters (34) as well as for redistributing the electrical power of the phases (R, S, T) of the three-phase current to be provided to the current load of thermal and electrical energy, either
a) a control element (22) made up of a three-phase alternating current transformer (25) with electronic transducers (30, 31), the primary side (26) of which has three primary windings (27, 28, 29) assigned to a secondary output (32), one of the primary windings (27) of which is connected directly to the phases S, T and the other primary windings (28, 29) of which are connected via a respective electronic transducer (30, 31) to the phases S, T and R, T, or
b) for each phase R, S and T a control element (22) with diode-controlled rectifiers controlled by the central logic (21) is provided.

11. Device according to claim 10, **characterized in that** the transducer (30) assigned to the phases (R, S) comprises bidirectionally switched rectifier diodes and the transducer (31) assigned to the phases (R, T) comprises unidirectionally switched rectifier diodes which are connected to the central logic (21) for the purpose of driving.

12. Device according to claim 10, **characterized in that** the three-phase alternating current transformer (25) and the transducers (30, 31) are integrated in the generator (3).

13. Device according to claim 10, **characterized in that** the three-phase alternating current transformer (25) is a three-legged transformer.

14. Device according to claim 10, **characterized in that** the heat meters (19) are arranged on the heat accumulator (7) and the electricity meters (34) are assigned to the dwelling's distribution board, the heat meters (19) and the electricity meter (34) being connected to the central logic (21).

15. Device according to claim 10, **characterized in that** the electricity meter (34) is a four-quadrant meter.

## Revendications

1. Procédé pour l'exploitation d'une centrale de mini/micro-cogénération de chaleur et d'électricité pour une maison unifamiliale, dans lequel un moteur à combustion (2) génère un couple de rotation pour la commande d'une machine asynchrone réalisée sous la forme d'un générateur (3), ladite machine fournissant un courant triphasé comprenant les phases R, S et T pour le prélèvement d'une énergie électrique à des fins de production d'énergie thermique et d'énergie électrique pour les consommateurs dans la maison, ainsi qu'un courant de gaz d'échappement dont la chaleur résiduelle est acheminée en passant par un échangeur de chaleur (4) à un accumulateur de chaleur (7) pour la production d'énergie thermique destinée au circuit d'eau sanitaire et de chauffage et pour la production de l'eau chaude de la maison, un stockage dans des batteries (24) destiné à fournir une énergie électrique pour des consommateurs électriques et une unité faisant office de redresseur/inverseur (33) pour charger les batteries (24) via le redressage d'au moins une partie du courant alternatif fourni par le générateur (3) et pour convertir du courant continu en courant alternatif pour des consommateurs électriques dans la maison ; dans lequel le moteur à combustion (2), le générateur (3), l'accumulateur de chaleur (7), les batteries (24) et l'unité faisant office de redresseur/inverseur (33) sont commandés à partir d'une logique centrale (21), **caractérisé en ce que** l'énergie électrique du générateur (3) qui doit être fournie aux phases R, S et T est redistribuée, via un organe de réglage (22), en fonction de la charge de consommation momentanément présente constituée par de l'énergie thermique et de l'énergie électrique, au moins à partir des phases R et T en partie ou totalement à la phase S, et est adaptée à la charge momentanément présente constituée par de l'énergie thermique et de l'énergie électrique ; dans lequel les charges momentanées constituées par de l'énergie thermique et par de l'énergie électrique sont mesurées en permanence, les valeurs de mesure étant transmises à la logique centrale (21), pour y être comparées au régime journalier et sur une durée annuelle adaptée à la consommation pour l'énergie thermique et l'énergie électrique, des déviations de charge avec la tolérance admise sont déterminées et l'énergie électrique fournie à la phase R ou T ou aux phases R, T est alimentée à la phase S par l'intermédiaire de l'organe de réglage (22) en l'absence de potentiel de manière correspondante à la charge de consommation momentanée.

2. Procédé selon la revendication 1, **caractérisé par** les étapes suivantes dans lesquelles :
a) on fait démarrer le moteur à combustion (2) et on met le générateur (3) en circuit afin de générer un courant triphasé comprenant les phases R, S et T ;
b) on mesure en continu la charge de consommation via des dispositifs de mesure thermique (19) attribués à l'accumulateur de chaleur (7) et via des compteurs électriques (34) attribués aux consommateurs électriques ;
c) on dépose dans la logique centrale (21) un régime journalier et sur une durée annuelle calculée sur base de la maison unifamiliale, pour l'énergie thermique et pour l'énergie électrique, et leur progression permanente de manière correspondante à la consommation réelle ;
d) on évalue les charges partielles du moment pour l'énergie thermique et pour l'énergie électrique à partir des valeurs de mesure et on détermine les déviations de charge par rapport au régime journalier par l'intermédiaire de la logique centrale (21) ;
e) on convertit de manière directe la fraction d'énergie qui représente une première phase (S) du courant triphasé via le courant disponible et on transforme les fractions d'énergie représentant les deux autres phases du courant triphasé par l'intermédiaire de l'organe de réglage (22) ;
f) on répartit les fractions d'énergie des phases (R, T) sur la phase (S) par l'intermédiaire de l'organe de réglage (22) d'une manière telle qu'elles correspondent à la charge momentanément déterminée d'énergie thermique et d'énergie électrique conformément à l'étape d) ;
g) les batteries (24) et l'accumulateur de chaleur (7) d'une manière telle que la fraction d'énergie qui revient au stockage dans des batteries dépasse de 5 à 10 % la fraction d'énergie qui revient à l'accumulateur de chaleur (7) ;
h) on met le moteur à combustion hors circuit (2) dès que le stockage dans des batteries (24) et l'accumulateur de chaleur (7) ont atteint leurs capacités maximales prédéfinies en ce qui concerne les fractions d'énergie ;
i) on procède à un prélèvement des fractions d'énergie à partir des batteries (24) et à partir de l'accumulateur de chaleur (7) par l'intermédiaire des consommateurs jusqu'à une capacité résiduelle minimale de 4 % en ce qui concerne les fractions d'énergie ; et
j) on met en circuit le moteur à combustion (2) dès que les batteries (24) et dans l'accumulateur de chaleur (7) tombent en dessous de la capacité résiduelle conformément à l'étape i) et on met à nouveau en œuvre les étapes a) à j).

3. Procédé selon la revendication 1 ou 2, **caractérisé en ce qu'**on utilise, à titre d'organe de réglage (22) un transformateur de courant triphasé-courant alternatif (25) comprenant des convertisseurs (30, 31), dans lequel le transformateur de courant triphasé-courant alternatif (25) convertit la fraction d'énergie qui revient à la phase (S) via le courant directement disponible et les convertisseurs (30, 31) alimentent la phase (S) en l'absence de potentiel avec les fractions d'énergie qui reviennent aux autres phases.

4. Procédé selon la revendication 3, **caractérisé en ce que** le convertisseur (30) pour les phases (S, R) et le convertisseur (31) pour les phases (R, T) sont mis en service via la mise en circuit de redresseurs, d'une manière telle qu'un convertisseur (31) fait l'objet d'une mise en circuit unidirectionnelle et l'autre convertisseur (30) fait l'objet d'une mise en circuit bidirectionnelle.

5. Procédé selon la revendication 3, **caractérisé en ce qu'**on utilise, à titre de transformateur de courant triphasé-courant alternatif (25), un transformateur du type à trois branches.

6. Procédé selon la revendication 1, **caractérisé en ce que** le transformateur de courant triphasé-courant alternatif (25) et les convertisseurs (30, 31) sont intégrés dans le générateur (3) et sont mis en service directement à partir de ce dernier.

7. Procédé selon la revendication 1 ou 2, **caractérisé en ce qu'**on utilise, à titre d'organe de réglage (22), trois redresseurs commandés.

8. Procédé selon la revendication 1, **caractérisé en ce qu'**on met en œuvre, à titre de compteurs électriques (34), des compteurs du type à quatre cadrans.

9. Procédé selon la revendication 1, **caractérisé en ce que** les batteries (24) sont alimentées avec du courant continu d'une source solaire ou d'une autre source externe.

10. Dispositif pour la mise en œuvre du procédé selon la revendication 1, comprenant : un moteur à combustion (2) qui génère un couple de rotation pour la commande d'une machine asynchrone réalisée sous la forme d'un générateur (3), ladite machine fournissant du courant triphasé comprenant les phases R, S et T pour le prélèvement d'une énergie électrique destinée à une consommation d'énergie thermique et d'énergie électrique dans la maison, ainsi qu'un courant de gaz d'échappement dont la chaleur résiduelle est acheminée en passant par un échangeur de chaleur (4) à un accumulateur de chaleur (7) pour la production d'énergie thermique destinée au circuit d'eau sanitaire et de chauffage et la production de l'eau chaude de la maison ; des batteries (24) pour la fourniture d'énergie électrique destinées à des consommateurs électriques ; une unité faisant office de redresseur/inverseur (33) destinée au chargement des batteries (24) via le redressage d'au moins une partie du courant alternatif fourni par le générateur (3) et à la conversion du courant continu en courant alternatif pour des consommateurs électriques dans la maison; ainsi qu'une logique centrale (21) qui est reliée au moteur à combustion (2), au générateur (3), à l'accumulateur de chaleur (7), aux batteries (24) et à l'unité faisant office de redresseur/inverseur (33) à des fins de commande, **caractérisé en ce que**, pour la détermination de la charge momentanée d'énergie thermique et d'énergie électrique, on prévoit des calorimètres (19) et des compteurs électriques (34), et pour la redistribution de l'énergie électrique des phases R, S et T du courant triphasé à fournir à la charge momentanée d'énergie thermique et énergie électrique, on prévoit
a) soit un organe de réglage (22) réalisé à partir d'un transformateur de courant triphasé-courant alternatif (25) comprenant des convertisseurs électroniques (30, 31) dont le côté primaire (26) présente trois enroulements primaires (27, 28, 29) attribués à une sortie secondaire (32), un des enroulements primaires (27) en question étant relié directement aux phases (S, T) et les autres enroulements primaires (28, 29) étant reliés via respectivement un convertisseur électronique (30, 31) aux phases S, T et R, T ;
b) soit, pour chaque phase, R, S, et T, un organe de réglage (22) comprenant des redresseurs réglés par des diodes, commandés par la logique centrale (21).

11. Dispositif selon la revendication 10, **caractérisé en ce que** le convertisseur (30) attribué aux phases (R, S) présente des diodes de redresseur mises en circuit de manière bidirectionnelle et le convertisseur (31) attribué aux phases (R, T) présente des diodes de redresseur mises en circuit de manière unidirectionnelle, qui sont reliées, à des fins de commande, à la logique centrale (21).

12. Dispositif selon la revendication 10, **caractérisé en ce que** le transformateur de courant triphasé-courant alternatif (25) et les convertisseurs (30, 31) sont intégrés dans le générateur (3).

13. Dispositif selon la revendication 10, **caractérisé en ce que** le transformateur de courant triphasé-courant alternatif (25) représente un transformateur du type à trois branches.

14. Dispositif selon la revendication 10, **caractérisé en ce que** les calorimètres (19) sont disposés sur l'accumulateur de chaleur (7) et les compteurs électriques (34) sont attribués à la distribution domestique ; dans lequel les calorimètres (19) et le compteur électrique (34) sont reliés à la logique centrale (21).

15. Dispositif selon la revendication 10, **caractérisé en ce que** le compteur électrique (34) représente un compteur du type à quatre cadrans.
